# EUROPÄISCHE PATENTSCHRIFT

(11) **EP 1 460 311 B1**
(45) Veröffentlichungstag und Bekanntmachung des Hinweises auf die Patenterteilung: **17.05.2006**
(21) Anmeldenummer: 04005859.6
(22) Anmeldetag: 12.03.2004
(51) Int. Cl.: F16H 25/24

(54) **Sicherheitsmutter und Aufnahmeteil für eine Sicherheitsmutter für einen Linearantrieb**
Safety nut and support of a safety nut for a linear actuator
Ecrou de sécurité et support d'un écrou de sécurité pour actionneur linéaire

(30) Priorität: 19.03.2003 CH 4452003
(43) Veröffentlichungstag der Anmeldung: 22.09.2004
(73) Patentinhaber: AB SKF, S-415 50 Göteborg (SE)
(72) Erfinder: Matter, Andrea, 4419 Lupsingen (CH); Felice, Salvador, 4410 Liestal (CH); Soltermann, Marcel, 4244 Röschenz (CH)
(74) Vertreter: EGLI-EUROPEAN PATENT ATTORNEYS

(56) Entgegenhaltungen:
- EP-A- 0 995 714
- DE-U- 29 506 066
- US-A- 5 918 505

## Beschreibung

Die Erfindung betrifft eine Sicherheitsmutter für einen Linearantrieb mit einer selbsthemmenden oder einer nicht-selbsthemmenden Gewindespindel nach Patentanspruch 1 sowie ein Aufnahmeteil für eine Sicherheitsmutter für einen Linearantrieb mit einer selbsthemmenden oder einer nicht-selbsthemmenden Gewindespindel nach Patentanspruch 2.

Ferner betrifft die Erfindung auch die Kombination einer Sicherheitsmutter mit einem Aufnahmeteil für einen Linearantrieb mit einer selbsthemmenden oder einer nicht-selbsthemmenden Gewindespindel nach einem der Patentansprüche 3, 5 oder 6.

Ferner betrifft die Erfindung auch einen Linearantrieb mit einer selbsthemmenden oder einer nicht-selbsthemmenden Gewindespindel und einer Sicherheitsmutter und einem Aufnahmeteil für eine Sicherheitsmutter nach Patentanspruch 7.

Eine gattungsgemäße Sicherheitsmutter, ein gattungsgemäßes Aufnahmeteil und ein gattungsgemäßer Linearantrieb sind aus der DE 29506066 U bekannt.

Linearantriebe mit einem linear bewegbaren Schubrohr und einer im Schubrohr geführten und von einer Antriebseinheit angetriebenen Gewindespindel werden häufig verwendet, um Vorrichtungen oder Vorrichtungsteile linear um kurze Strecken zu verschieben oder um Klappen, Deckel und dergleichen zu öffnen und zu schliessen.

Bei derartigen Linearantrieben kann man grössere Wirkungsgrade erzielen, indem Gewindespindeln mit so grossen Gewindesteigungen eingesetzt werden, dass die Selbsthemmungsgrenzen überschritten werden. Man spricht dann von nicht-selbsthemmenden Gewindespindeln. In der Folge müssen zwischen den Spindeln und den Antriebsachsen der Antriebseinheit zusätzliche Bauteile, wie beispielsweise Schlingfederbremsen (wrap spring clutches/brakes) eingesetzt werden, um zu verhindern, dass die vom Linearantrieb angehobene Last beim Abstellen des Antriebsmotors in der Antriebseinheit die Spindel wieder in der entgegengesetzten Richtung zu drehen vermag. Derartige Schlingfederbremsen sind bereits wohlbekannt und nicht Gegenstand der vorliegenden Erfindung. Die Einführung nicht-selbsthemmender Gewindespindeln bringt nun aber auch neue Probleme im Sicherheitsbereich, insbesondere bei Anwendungen bei denen eine ausgesprochene fail-safe Sicherheit gefordert ist, wie beispielsweise im Medizinalbereich bei Operationstischen oder Spitalbetten. Es geht darum, dass bei bestimmten 'kritischen' Bauteilen eine sehr hohe Sicherheit bezüglich sogenannter "Erstfehlerfälle" eingebaut sein muss. Es muss ein zweites Mittel vorhanden sein, das beim Ausfall des ersten Mittels (Erstfehlerfall) die betreffende Funktion übernimmt und sicherstellt.

Die Gewindespindel eines gattungsgemässen Linearantriebes läuft üblicherweise in einer Spindelmutter. Über die Spindelmutter wird somit die zu verschiebende Last bewegt. Derartige Spindelmuttern sind häufig aus einem Kunststoff gefertigt und haben ein Innengewinde, das insbesondere bei hohen Belastungen auch hoher Abnutzung unterliegt, selbstverständlich aber auch anderen Effekten wie Alterung etc. Weil die ganze Last über dieses Innengewinde übertragen wird, muss eine Sicherung für den Fall vorhanden sein, dass dieses Gewinde durchbricht. Gängige Lösungen bei klassischen Linearantrieben mit selbsthemmenden Gewindespindeln bestehen darin, dass (von der Spindelmutter) etwas beabstandet eine Sicherheitsmutter (aus Metall) angebracht ist, die im Normalfall unbelastet mitläuft, bei einem Gewindebruch der Spindelmutter aber die ganze Last aufnehmen kann. Im Falle einer auf Druck belasteten Anwendung (z.B. beim Heben einer Last) ist die Sicherheitsmutter deshalb zwischen dem Spindelantrieb und der Spindelmutter angeordnet, um bei Bedarf die Last auffangen zu können. Lösungen mit Sicherheitsmuttern sind deshalb oft nur in einer Richtung wirkende Sicherheitseinrichtungen.

Grundsätzlich könnten auch bei Linearantrieben mit nicht-selbsthemmenden Gewindespindeln 'konventionelle' Sicherheitsmuttern eingesetzt werden, sie hätten aber zur Folge, dass sie im Falle eines Gewindebruches der Spindelmutter die Bewegung der Last unter Umständen doch nicht aufhalten könnte, weil die Spindelmutter natürlich die gleichen nicht-selbsthemmenden Gewindeeigenschaften wie die Spindelmutter aufweist.

Ziel der vorliegenden Erfindung ist deshalb, eine Lösung mit einer Sicherheitsmutter anzugeben, mit der die Bewegung der Last im Falle eines Gewindebruches der Spindelmutter vollständig aufgehalten wird.

Diese Aufgabe wird durch die Merkmale in den unabhängigen Patentansprüchen 1, 2, 3, 5 und 7 gelöst.

Die Lösung erfordert, dass zumindest eine Anlagefläche der Sicherheitsmutter oder eine Anlagefläche eines Aufnahmeteiles für die Sicherheitsmutter schief angeordnet ist, um im Fall eines Gewindebruches der Spindelmutter ein Verkanten der Sicherheitsmutter auf der Gewindespindel zu erreichen und durch die Verkantung die weitere Bewegung der Last aufzuhalten.

Da das Lösungsprinzip die kinematische Umkehr erlaubt, kann das Teil, das die schief angeordnete Anlagefläche aufweist, entweder die Sicherheitsmutter selber oder das Aufnahmeteil für die Sicherheitsmutter sein.

Der laststoppende Effekt im Falle eines Versagens des Gewindes der Spindelmutter kommt durch das Zusammenwirken der erfindungsgemäss komplementär ausgebildeten Sicherheitsmutter mit dem Aufnahmeteil für die Sicherheitsmutter zustande. Wird eine Sicherheitsmutter-Anlagefläche relativ zur Gewindeachse der Sicherheitsmutter schief ausgebildet, so muss die entsprechende komplementäre Aufnahmeteil-Anlagefläche relativ zur Achse der Gewindespindel orthogonal ausgebildet sein, und umgekehrt.

Die erfindungsgemässe Sicherheitsmutter-Lösung kann sowohl bei Linearantrieben mit selbsthemmender Gewindespindel wie auch bei Linearantrieben mit nicht-selbsthemmender Gewindespindel eingesetzt werden. Im ersteren Fall ergibt sich sogar noch eine erhöhte Sicherheit, da die Selbsthemmungs-Eigenschaft und die Verkantungs-Eigenschaft im Einsatzfall gleichwirkend sind. Ausserdem ermöglicht diese dual-use Eigenschaft eine Vereinheitlichung im Sortiment.

Die erfindungsgemässe Sicherheitsmutter-Lösung kann sowohl bei Druck- wie auch bei Zugbelastungen eingesetzt werden. Im Falle einer Druckbelastung muss an der der Spindelmutter zugewandten Seite mindestens eine Anlagefläche (entweder an der Sicherheitsmutter oder am Aufnahmeteil für die Sicherheitsmutter) schief ausgebildet sein. Im Falle einer Zugbelastung muss an der der Spindelmutter abgewandten Seite mindestens eine Anlagefläche (entweder an der Sicherheitsmutter oder am Aufnahmeteil für die Sicherheitsmutter) schief ausgebildet sein. Die Sicherheitsmutter-Lösung kann aber auch so ausgestaltet sein, dass die Sicherung sowohl bei Druck wie auch bei Zugbelastungen erfolgt. Es erfordert beispielsweise lediglich, dass beide Anlageflächen der Sicherheitsmutter schief zur Gewindeachse der Sicherheitsmutter verlaufen. Im Gegensatz zu Lösungen mit Sicherheitsmuttern bei Linearantrieben mit selbsthemmenden Gewindespindeln bedarf es in diesem Fall lediglich einer einzigen Sicherheitsmutter und sie kann grundsätzlich sogar auf einer beliebigen Seite der Spindelmutter angeordnet sein.

Vorteilhaft wird die Sicherheitsmutter im Aufnahmeteil mittels eines Teiles mit einer Sollbruchstelle gegenüber der Spindelmutter verschiebungs- und verdrehungsfrei in einer Weise so gehalten, dass sich die Mutter-Anlageflächen und die Aufnahmeteil-Anlageflächen nicht berühren und die Sicherheitsmutter bei intakter Sollbruchstelle unbelastet (mit der Spindelmutter) mitläuft. Sicherheitsmutter und Spindelmutter sind somit im Normalbetrieb gewissermassen 'synchronisiert'.

Zwischen der Sicherheitsmutter und der Gewindespindel muss Spiel vorhanden sein, um das Verkanten der Sicherheitsmutter beim Anliegen der Mutter-Anlagefläche an der Aufnahmeteil-Anlagefläche im Versagensfall des Spindelmutter-Gewindes, bzw. daraufhin in der Folge des Versagens an der Sollbruchstelle, zu ermöglichen.

Im Weiteren kann das Aufnahmeteil für die Spindelmutter aus einem oder aus mehreren Teilen bestehen. Als fertigungstechnisch günstig hat sich erwiesen, für die Spindelmutter eine Spindelmutteraufnahme vorzusehen, in die eine geeignete Büchse mit einer Verdrehsicherung für die Sicherheitsmutter einsetzbar ist und wobei noch ein Abschluss- bzw. Haltestück vorgesehen ist. Das bislang lediglich allgemein erwähnte Aufnahmeteil wird dann durch die Kombination der Spindelmutteraufnahme mit der Büchse und dem Haltestück gebildet. An keinem dieser drei Teile müssen schief verlaufende (fertigungstechnisch schwierig herzustellende) Flächen angebracht werden.

Im Folgenden wird eine erfindungsgemässe Sicherheitsmutter-Lösung für Druck- und Zugbelastung anhand eines Ausführungsbeispiels mit einer nicht-selbsthemmenden Gewindespindel mit Zeichnungen erläutert.

In den Zeichnungen zeigen:
- Fig. 1: einen ersten Längsschnitt entlang der Linie B-B durch eine Spindelmutter mit montierter Sicherheitsmutter,
- Fig. 2: einen zweiten Längsschnitt entlang der Linie A-A durch eine Spindelmutter mit montierter Sicherheitsmutter,
- Fig. 3: eine Detailansicht von C (ohne Haltestück),
- Fig. 4: eine erste Prinzipdarstellung zur Funktionsweise mit intaktem Spindelmutter-Gewinde,
- Fig. 5: eine zweite Prinzipdarstellung zur Funktionsweise mit durchbrochenem Spindelmutter-Gewinde bei Zug-Belastung, und
- Fig. 6: eine dritte Prinzipdarstellung zur Funktionsweise mit durchbrochenem Spindelmutter-Gewinde bei Druck-Belastung.

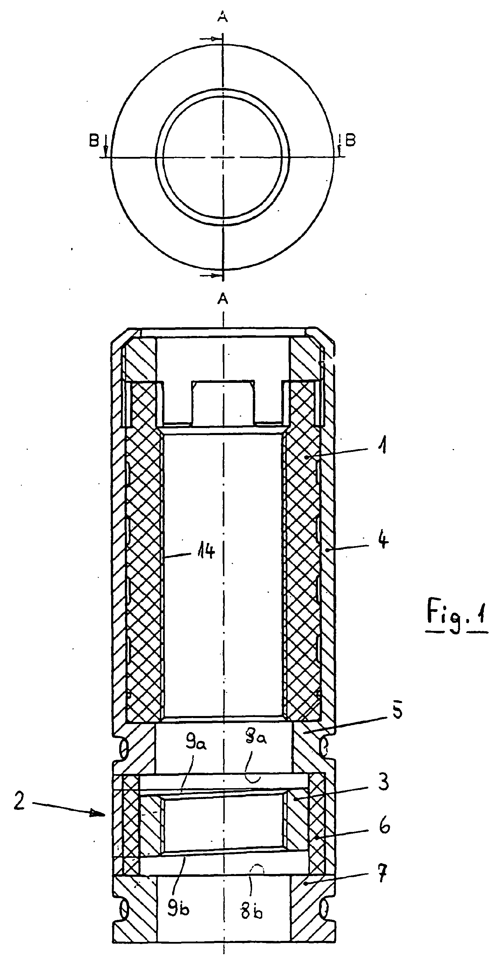

Die Figur 1 zeigt einen ersten Längsschnitt entlang der Linie B-B durch eine Spindelmutter 1 mit einer in einem Aufnahmeteil 2 angeordneten Sicherheitsmutter 3. Die Spindelmutter 1 ist dabei in einer Mutteraufnahme 4 gehalten und an einem Innensteg 5 in Axialrichtung positioniert. Auf der gegenüberliegenden Seite des Innenstegs 5 ist eine Büchse 6 ebenfalls in der Mutteraufnahme 4 gehalten und am Innensteg 5 in Axialrichtung gegenüber der Spindelmutter 1 positioniert. Mit einem Haltestück 7 wird die Büchse 6 in der Mutteraufnahme 4 gehalten. In der Büchse 6 ist die Sicherheitsmutter 3 positioniert. Mutteraufnahme 4, Büchse 6 und Haltestück 7 bilden hier zusammen das Aufnahmeteil 2.

Der Innensteg 5 hat sicherheitsmutterseitig eine erste Aufnahmeteil-Anlagefläche 8a. Das Haltestück 7 hat ebenfalls sicherheitsmutterseitig eine zweite Aufnahmeteil-Anlagefläche 8b. Die Sicherheitsmutter 3 hat innenstegseitig eine erste Mutter-Anlagefläche 9a und haltestückseitig eine zweite Mutter-Anlagefläche 9b. Beide Mutter-Anlageflächen 9a und 9b sind hier in einem Winkel von ca. 2° gegenüber der Axialrichtung (Gewindeachse der Sicherheitsmutter 3) schief ausgebildet. Die Aufnahmeteil-Anlageflächen 8a und 8b sind hingegen gegenüber der Axialrichtung (Gewindeachse der Spindelmutter 1 und der Gewindespindel) orthogonal ausgebildet.

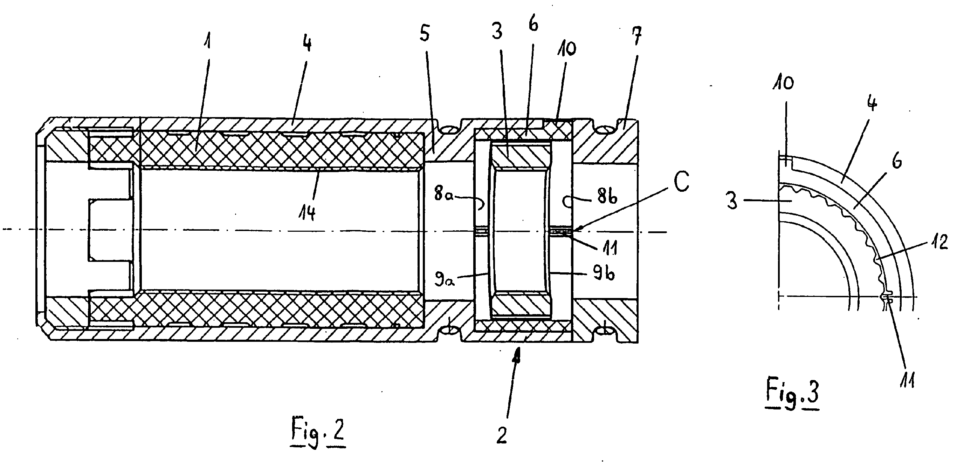

Die Sicherheitsmutter 3 ist in der Büchse 6 mittels eines Teiles mit einer Sollbruchstelle (vergl. dazu Fig. 2 und 3) gegenüber der Mutteraufnahme 4 und der Spindelmutter 1 verschiebungs- und verdrehungsfrei in einer Weise gehalten, dass sich die Mutter-Anlageflächen 9a, 9b und die Aufnahmeteil-Anlageflächen 8a, 8b nicht berühren und die Sicherheitsmutter 3 bei intakter Sollbruchstelle unbelastet (mit der Spindelmutter 1) mitläuft. Sicherheitsmutter 3 und Spindelmutter 1 sind somit im Normalbetrieb gewissermassen 'synchronisiert'

Die Figur 2 zeigt einen zweiten Längsschnitt entlang der Linie A-A durch die Spindelmutter 1 mit montierter Sicherheitsmutter 3 in ähnlicher Weise wie die Darstellung in Figur 1. Die Figur 3 zeigt eine Detailansicht von C (ohne Haltestück 7). In diesen beiden Figuren ist zusätzlich ein Positionierungsnocken 10 sichtbar, mit dem die Büchse 6 verdrehungsfrei in der Mutteraufnahme 4 gehalten ist. An der Büchse 6 sind zwei schmalwandige nockenartige Stege 11 angebracht, die in Längsrillen oder Längsnuten 12 an der Umfangfläche der Sicherheitsmutter 3 eingreifen und diese dort verschiebungs- und verdrehungsfrei positionieren. Die Stege 11 sind als Sollbruchstelle ausgebildet. Die Längsnuten 12 sind so bemessen, dass das Lastmoment, das im Falle eines Versagens des Spindelmuttergewindes über die Sicherheitsmutter übertragen wird, die Stege 11 abzubrechen vermag, worauf die Sicherheitsmutter 3 auf der Gewindespindel verkantet und in der Folge die Relativbewegung zwischen Gewindespindel und Spindelmutter stoppt.

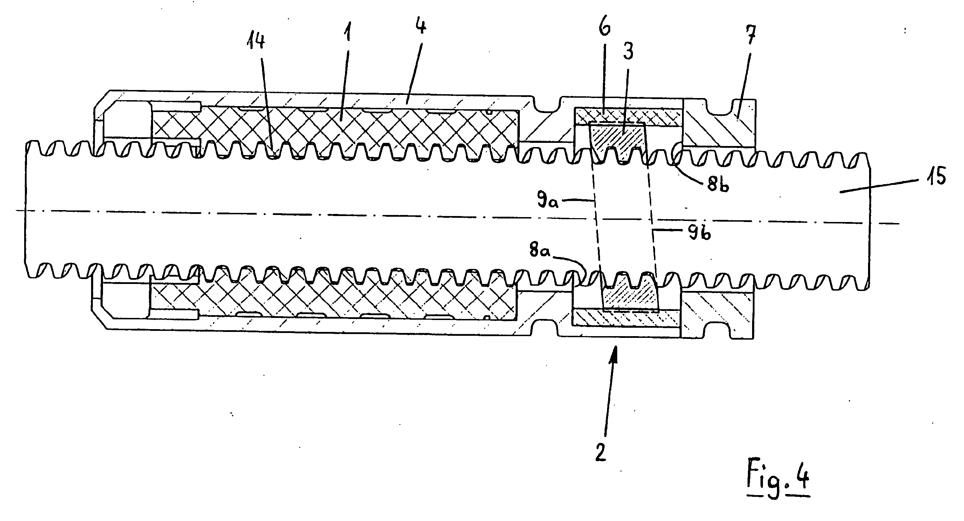

In den Figuren 4, 5 und 6 wird die Funktionsweise der Sicherheitsmutter anhand des Ausführungsbeispiels näher erläutert.

Die Figur 4 ist eine Prinzipdarstellung zur Funktionsweise der Sicherheitsmutter 3 bei intaktem Spindelmuttergewinde 14. Die Sicherheitsmutter 3 wird über die Büchse 6 in der Mutteraufnahme 4 bezüglich der Spindelmutter 1 verschiebungs- und verdrehungsfrei gehalten. In diesem Zustand ist die Sicherheitsmutter 3 gegenüber der Spindelmutter 1 'synchronisiert', d.h. sie läuft lastfrei mit. Die Synchronisierung erfolgt über die relative Positionierung (Abstand und Verdrehung) der Sicherheitsmutter 3 gegenüber der Spindelmutter 1. Zu diesem Zweck dienen die Längsnuten 12 an der Sicherheitsmutter 3 und der Positionierungsnocken 10 sowie der Steg 11 an der Büchse 6 (siehe Fig. 3). Zug- oder Druckkräfte der vom Linearantrieb zu bewegenden Lasten werden über die Mutteraufnahme 4, die Spindelmutter 1 und das Spindelmuttergewinde 14 direkt auf die Gewindespindel 15 übertragen.

Die schief stehende Anlagefläche 9a der Sicherheitsmutter 3 und die 'gerade' (orthogonal zur Drehachse der Gewindespindel 15) verlaufende Anlagefläche 8a des Aufnahmeteils bzw. die schief stehende Anlagefläche 9b der Sicherheitsmutter 3 und die 'gerade' Anlagefläche 8b des Aufnahmeteils berühren sich bei intaktem Spindelmuttergewinde 14 nicht. Wie bereits früher erwähnt, kann durch die Formgebung von Sicherheitsmutter 3 und Aufnahmeteil erreicht werden, dass die angestrebte Sicherheitsfunktion sowohl bei Zug- wie auch bei Druckbelastung vorhanden ist. Hier wird sie erreicht indem beide Seiten der Sicherheitsmutter 3 mit schief verlaufenden Anlageflächen 9a, 9b versehen sind.

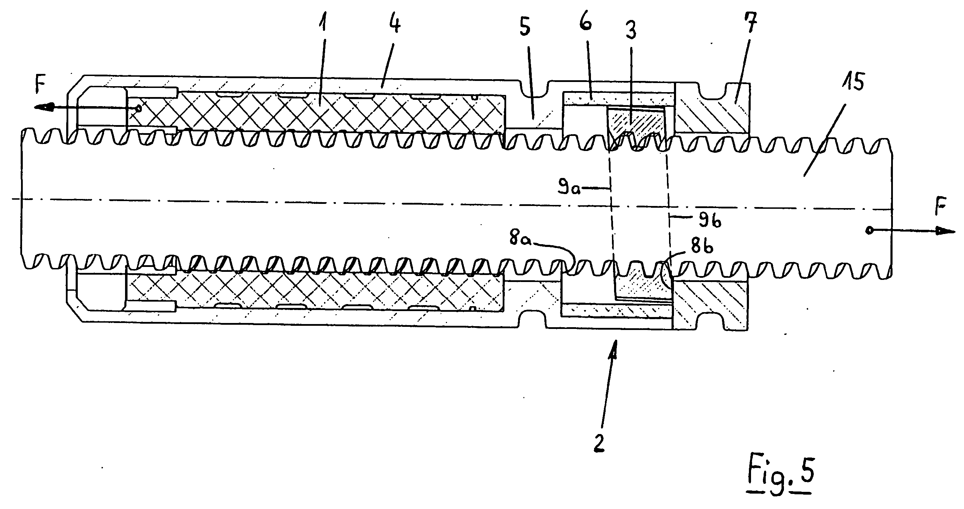

Die Figur 5 ist eine Prinzipdarstellung zur Funktionsweise der Sicherheitsmutter 3 bei einem Zug-Antrieb und bei durchbrochenem Spindelmuttergewinde 14. Durch die Zugbelastung (F) werden die Gewindespindel 15 und die Spindelmutter 1 bzw. die Mutteraufnahme auseinandergezogen. Da hier angenommen wird, dass das Spindelmuttergewinde 14 bereits versagt hat, ist in der Folge der Steg 11 (Verdrehsicherung und Sollbruchstelle) an der Büchse 6 unter der Wirkung des plötzlich darauf einwirkenden Lastmomentes ebenfalls gebrochen und die Sicherheitsmutter 3 wird gegen das Haltestück 7 gedrückt. Das weiterhin wirkende Lastmoment versucht die Sicherheitsmutter 3 weiter zu drehen (was zunächst auch geht, weil das Gewinde ja nicht-selbsthemmend ist) und in der Folge verkantet sich die Sicherheitsmutter 3 an der Gewindespindel 15 weil das dazu notwendige Spiel besteht und weil die schiefe Mutter-Anlagefläche 9b und die 'gerade' Aufnahmeteil-Anlagefläche 8b aneinander zu liegen kommen. Durch das Verkanten wird die weitere Relativbewegung zwischen der Gewindespindel 15 und der Spindelmutter 1 bzw. der Mutteraufnahme 4 wirksam gestoppt.

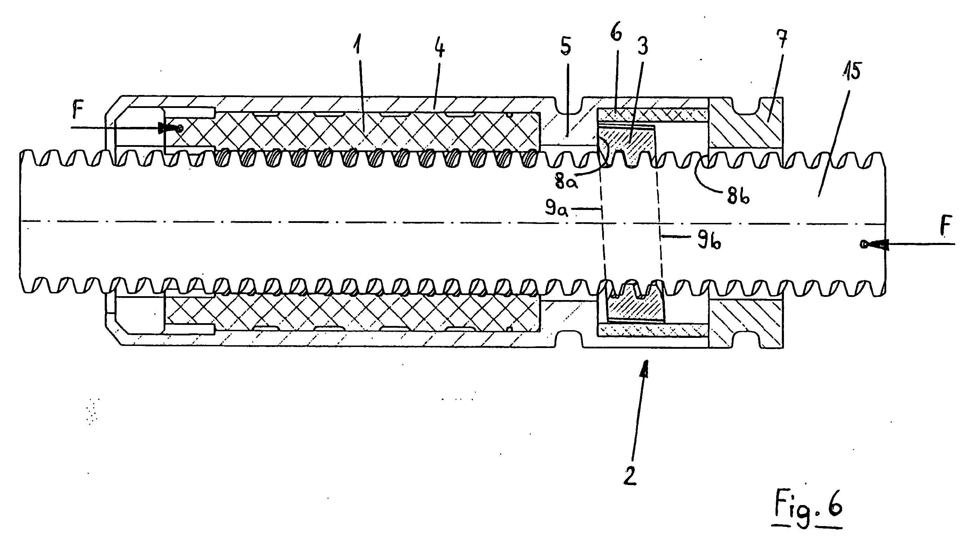

Die Figur 6 ist eine Prinzipdarstellung zur Funktionsweise der Sicherheitsmutter 3 bei einem Druck-Antrieb und bei durchbrochenem Spindelmuttergewinde 14. Durch die Druckbelastung (F) werden die Gewindespindel 15 und die Spindelmutter 1 bzw. die Mutteraufnahme gegeneinander gedrückt. Da hier angenommen wird, dass das Spindelmuttergewinde 14 bereits versagt hat, ist in der Folge der Steg 11 (Verdrehsicherung und Sollbruchstelle) an der Büchse 6 unter der Wirkung des plötzlich darauf einwirkenden Lastmomentes ebenfalls gebrochen und die Sicherheitsmutter 3 wird gegen den Innensteg 5 gedrückt. Das weiterhin wirkende Lastmoment versucht die Sicherheitsmutter 3 weiter zu drehen (was zunächst auch geht, weil das Gewinde ja nicht-selbsthemmend ist) und in der Folge verkantet sich die Sicherheitsmutter 3 an der Gewindespindel 15, weil das dazu notwendige Spiel besteht und weil die schiefe Mutter-Anlagefläche 9a und die 'gerade' Aufnahmeteil-Anlagefläche 8a aneinander zu liegen kommen. Durch das Verkanten wird die weitere Relativbewegung zwischen der Gewindespindel 15 und der Spindelmutter 1 bzw. der Mutteraufnahme 4 wirksam gestoppt.

Es hat sich gezeigt, dass das Verkanten der Sicherheitsmutter 3 gewährleistet ist, wenn die Anlageflächen 9a oder 9b mit einer Schiefe von ca. 2° versehen werden und wenn zwischen der Gewindespindel 15 und der Sicherheitsmutter 3 ein Spiel von ca. 0.2 mm vorhanden ist (bei Gewindespindeln mit Durchmessern von ca. 20 mm) . Es hat sich weiterhin gezeigt, dass diese Sicherheitsmutter-Lösung sowohl fast unbelastet wie auch bei Volllast zuverlässig funktioniert.

Prinzipiell beruht die erfinderische Idee also darauf, dass (im Einsatzfall) zwangsweise ein Verkanten der Sicherheitsmutter herbeigeführt wird. Dies geschieht vorzugsweise mit einer schrägen Anlagefläche an der Sicherheitsmutter, weil hier die Anlagefläche relativ einfach bearbeitbar ist. Offensichtlich ist, dass der gleiche Effekt natürlich auch erzielbar ist, wenn stattdessen die Anlagefläche des Teiles, an dem die Sicherheitsmutter anliegt, mit einer schrägen Anlagefläche versehen wird. Deshalb kann die Erfindung sowohl in der Ausgestaltung der Sicherheitsmutter wie auch in der Ausgestaltung des Aufnahmeteiles gesehen und realisiert werden.

Die Ausgestaltung erlaubt somit die kinematische Umkehr des Anwendungsprinzips.

Die maximale Funktionalität (Sicherheitsfunktion bei Zug- und bei Druck-Antrieb) erhält man, wenn mindestens zwei schräge Anlageflächen vorhanden sind. Diese können, wie im obigen Beispiel, beide an der Sicherheitsmutter ausgebildet sein. Es können aber auch beide am Aufnahmeteil ausgebildet sein und es besteht auch die Möglichkeit, die eine an der Sicherheitsmutter und die andere am Aufnahmeteil auszubilden. Die maximale Funktionalität ist deshalb mit verschiedenen konstruktiven Ausformungen der Kombination von Sicherheitsmutter und Aufnahmeteil erreichbar.

Im Weiteren kann das zwangsweise Verkanten der Sicherheitsmutter auch noch mit anderen Mitteln erzielt werden, beispielsweise mit an geeigneten Stellen angebrachten vorstehenden Nocken oder ähnlichen Ausformungen.

### Bezugsziffernliste:

- 1: Spindelmutter
- 2: Aufnahmeteil
- 3: Sicherheitsmutter
- 4: Mutteraufnahme
- 5: Innensteg
- 6: Büchse
- 7: Haltestück
- 8a: erste Aufnahmeteil-Anlagefläche
- 8b: zweite Aufnahmeteil-Anlagefläche
- 9a: erste Mutter-Anlagefläche
- 9b: zweite Mutter-Anlagefläche
- 10: Positionierungsnocken
- 11: Steg
- 12: Längsnute
- 13: -
- 14: Spindelmuttergewinde
- 15: Gewindespindel

## Patentansprüche

1. Sicherheitsmutter (3) für einen Linearantrieb mit selbsthemmender oder nicht-selbsthemmender Gewindespindel (15), **dadurch gekennzeichnet, dass** die Sicherheitsmutter (3) zumindest eine zur Gewindeachse der Sicherheitsmutter (3) schief angeordnete und als Stirnfläche ausgebildete Mutter-Anlagefläche (9a, 9b) aufweist.

2. Aufnahmeteil (2) für eine Sicherheitsmutter (3) für einen Linearantrieb mit selbsthemmender oder nicht-selbsthemmender Gewindespindel (15), **dadurch gekennzeichnet, dass** das Aufnahmeteil (2) zumindest eine zur Gewindeachse der Gewindespindel schief angeordnete und als Stirnfläche ausgebildete Aufnahmeteil-Anlagefläche (8a, 8b) aufweist.

3. Sicherheitsmutter (3) und Aufnahmeteil (2) für die Sicherheitsmutter für einen Linearantrieb mit selbsthemmender oder nicht-selbsthemmender Gewindespindel (15),
**dadurch gekennzeichnet, dass**
- die Sicherheitsmutter (3) zumindest eine zur Gewindeachse der Sicherheitsmutter schief angeordnete und als Stirnfläche ausgebildete Mutter-Anlagefläche (9a, 9b) aufweist,
- das Aufnahmeteil (2) für die Sicherheitsmutter zumindest eine zur Gewindeachse der Gewindespindel (15) orthogonale Aufnahmeteil-Anlagefläche (8a, 8b) für die Sicherheitsmutter aufweist.

4. Sicherheitsmutter (3) und Aufnahmeteil (2) nach Patentanspruch 3, **dadurch gekennzeichnet, dass** die Sicherheitsmutter (3) zwei zur Gewindeachse der Sicherheitsmutter schief angeordnete und als Stirnflächen ausgebildete Mutter-Anlageflächen (9a, 9b) aufweist.

5. Sicherheitsmutter (3) und Aufnahmeteil (2) für die Sicherheitsmutter für einen Linearantrieb mit selbsthemmender oder nicht-selbsthemmender Gewindespindel (15),
**dadurch gekennzeichnet, dass**
- die Sicherheitsmutter (3) zumindest eine zur Gewindeachse der Sicherheitsmutter orthogonale Mutter-Anlagefläche (9a, 9b) aufweist,
- das Aufnahmeteil (2) für die Sicherheitsmutter (3) zumindest eine zur Gewindeachse der Gewindespindel (15) schief angeordnete und als Stirnfläche ausgebildete Aufnahmeteil-Anlagefläche (8a, 8b) für die Sicherheitsmutter aufweist.

6. Sicherheitsmutter (3) und Aufnahmeteil (2) für die Sicherheitsmutter für einen Linearantrieb mit selbsthemmender oder nicht-selbsthemmender Gewindespindel (15), **dadurch gekennzeichnet, dass** die Sicherheitsmutter (3) oder das Aufnahmeteil (2) für die Sicherheitsmutter zumindest eine nockenartige Ausformung oder einen vorstehenden Absatz zur Erzielung einer Verkantung der Sicherheitsmutter aufweist.

7. Linearantrieb mit einer selbsthemmenden oder einer nicht-selbsthemmenden Gewindespindel (15) und einer Sicherheitsmutter (3), wobei
- die Gewindespindel (15) eine Spindelmutter (1) und ein mit der Spindelmutter drehfest verbundenes Aufnahmeteil (2) für die Sicherheitsmutter antreibt,
- die Sicherheitsmutter (3) eine erste und eine zweite Mutter-Anlagefläche (9a, 9b) aufweist,
- das Aufnahmeteil (2) eine erste und eine zweite Aufnahmeteil-Anlagefläche (8a, 8b) aufweist,
- die Sicherheitsmutter (3) im Aufnahmeteil (2) an einer Sollbruchstelle gegenüber der Spindelmutter (1) verschiebungs- und verdrehungsfrei in einer Weise gehalten ist, dass sich die Mutter-Anlageflächen (9a, 9b) und die Aufnahmeteil-Anlageflächen (8a, 8b) nicht berühren und die Sicherheitsmutter (3) bei intakter Sollbruchstelle unbelastet mit der Spindelmutter (1) mitläuft,
- die Sicherheitsmutter (3) zumindest eine zur Gewindeachse der Sicherheitsmutter schief angeordnete und als Stirnfläche ausgebildete Mutter-Anlagefläche (9a, 9b) aufweist und das Aufnahmeteil (2) zumindest eine zur Gewindeachse der Gewindespindel orthogonale und der zumindest einen Mutter-Anlagefläche (9a, 9b) zugewandte Aufnahmeteil-Anlagefläche (8a, 8b) aufweist, oder aber die Sicherheitsmutter (3) zumindest eine zur Gewindeachse der Sicherheitsmutter orthogonale Mutter-Anlagefläche (9a, 9b) aufweist und das Aufnahmeteil (2) zumindest eine zur Gewindeachse der Gewindespindel schief angeordnete, als Stirnfläche ausgebildete und der zumindest einen Mutter-Anlagefläche (9a, 9b) zugewandte Aufnahmeteil-Anlagefläche (8a, 8b) aufweist, und
- zwischen der Sicherheitsmutter (3) und der Gewindespindel (15) Spiel vorhanden ist, das eine Verkantung der Sicherheitsmutter (3) beim Anliegen der Mutter-Anlagefläche (9a, 9b) an der Aufnahmeteil-Anlagefläche (8a, 8b) im Falle des Versagens der Sollbruchstelle ermöglicht.

8. Linearantrieb nach Patentanspruch 7, **dadurch gekennzeichnet, dass** die Sicherheitsmutter (3) entlang der Umfangfläche Längsrillen oder Längsnuten (12) aufweist, eine mit dem Aufnahmeteil (2) drehfest verbundene Büchse (6) vorhanden ist, in der die Sicherheitsmutter (3) gegenüber der Spindelmutter (1) positioniert ist und ein vorstehender, die Sollbruchstelle bildender nockenartiger Steg (11) an der Büchse (6) in eine der Längsrillen oder Längsnuten (12) der Sicherheitsmutter (3) eingreift.

## Claims

1. Safety nut (3) for a linear drive with self-locking or non-self-locking threaded spindle (15), **characterised in that** the safety nut (3) has at least one nut contact face (9a, 9b) arranged obliquely to the thread axis of the safety nut (3) and designed as a front face.

2. Receiving section(2) for a safety nut (3) for a linear drive with self-locking or non-self-locking threaded spindle (15), **characterised in that** the receiving section (2) has at least one receiving section contact face (8a, 8b) arranged obliquely to the thread axis of the threaded spindle and designed as a front face.

3. Safety nut (3) and receiving section (2) for the safety nut for a linear drive with self-locking or non-self-locking threaded spindle (15), **characterised in that**
- the safety nut (3) has at least one nut contact face (9a, 9b) arranged obliquely to the thread axis of the safety nut and designed as a front face,
- the receiving section (2) for the safety nut has at last one receiving section contact face (8a, 8b) for the safety nut arranged orthogonally to the thread axis of the threaded spindle (15).

4. Safety nut (3) and receiving section (2) according to Claim 3, **characterised in that** the safety nut has two nut contact faces (9a, 9b) arranged obliquely to the thread axis of the safety nut and designed as front faces.

5. Safety nut (3) and receiving section (2) for the safety nut for a linear drive with self-locking or non-self-locking threaded spindle (15), **characterised in that**
- the safety nut (3) has at least one nut contact face (9a, 9b) orthogonal to the thread axis of the safety nut,
- the receiving section (2) for the safety nut (3) has at least one receiving section contact face (8a, 8b) for the safety nut arranged obliquely to the thread axis of the threaded spindle (15) and designed as a front face.

6. Safety nut (3) and receiving section (2) for the safety nut for a linear drive with self-locking or non-self-locking threaded spindle (15), **characterised in that** the safety nut (3) or the receiving section(2) for the safety nut has at least one cam-like design or a projecting shoulder for providing tilting of the safety nut.

7. Linear drive, with a self-locking or non-self-locking threaded spindle (15) and a safety nut (3), wherein
- the threaded spindle (15) drives a spindle nut (1) and a receiving section (2) for the safety nut connected rigidly to the spindle nut,
- the safety nut (3) has a first and a second nut contact face (9a, 9b),
- the receiving section (2) has a first and a second receiving section contact face (8a, 8b),
- the safety nut (3) is retained at a theoretical fracture point opposite the spindle nut, free of displacement and distortion, in such a manner that the nut contact faces (9a, 9b) and the receiving section contact faces (8a, 8b) do not touch each other, and the safety nut (3) rotates unloaded with the spindle nut (1) as long as the theoretical fracture point remains intact,
- the safety nut (3) has at least one nut contact face (9a, 9b) arranged obliquely to the thread axis of the safety nut and designed as a front face, and the receiving section (2) has at least one receiving section contact face (8a, 8b) orthogonal to the thread axis of the threaded spindle and one receiving section contact face (8a, 8b) facing at least one nut contact face (9a, 9b), or the safety nut (3) has at least one nut contact face (9a, 9b) orthogonal to the thread axis of the safety nut and the receiving section (2) has at least one receiving section contact face (8a, 8b) arranged obliquely to the thread axis of the threaded spindle, designed as a front face and facing at least one nut contact face (9a, 9b), and
- there is a clearance between the safety nut (3) and threaded spindle (15), which clearance allows tilting of the safety nut (3) when the nut contact face (9a, 9b) rests against the receiving section contact face (8a, 8b) in the event of failure of the theoretical fracture point.

8. Linear drive according to Claim 7, **characterised in that** the safety nut (3) has longitudinal slots or longitudinal grooves (12) along the peripheral surface, **in that** a bushing (6) rigidly connected to the receiving section (2) is provided, in which the safety nut (3) is positioned relative to the spindle nut (1), and **in that** a projecting cam-like bridge, forming the theoretical fracture point, engages in one of the longitudinal slots or grooves (12) of the safety nut (3) on the bushing (6).

## Revendications

1. Écrou de sécurité (3) pour un entraînement linéaire avec tige filetée (15) autobloquante ou non autobloquante, **caractérisé en ce que** l'écrou de sécurité (3) comporte au moins une surface d'appui (9a, 9b) de l'écrou de sécurité disposée en oblique par rapport à l'axe du taraudage et conçue sous la forme d'une surface frontale.

2. Élément de logement (2) pour un écrou de sécurité (3) pour un entraînement linéaire avec tige filetée (15) autobloquante ou non autobloquante, **caractérisé en ce que** l'élément de logement (2) comporte au moins une surface d'appui (8a, 8b) de l'élément de logement disposée en oblique par rapport à l'axe du taraudage et conçue sous la forme d'une surface frontale.

3. Écrou de sécurité (3) et élément de logement (3) pour l'écrou de sécurité (3) pour un entraînement linéaire avec tige filetée (15) autobloquante ou non autobloquante, **caractérisé en ce que**
- l'écrou de sécurité (3) comporte au moins une surface d'appui (9a, 9b) de l'écrou de sécurité disposée en oblique par rapport à l'axe du taraudage et conçue sous la forme d'une surface frontale,
- l'élément de logement (2) pour l'écrou de sécurité comporte au moins une surface d'appui orthogonale d'élément de logement (8a, 8b) pour l'écrou de sécurité.

4. Écrou de sécurité (3) et élément de logement (3) selon la revendication 3, **caractérisé en ce que** l'écrou de sécurité (3) comporte deux surfaces d'appui d'écrou de sécurité (9a, 9b) disposées en oblique par rapport à l'axe du taraudage de l'écrou de sécurité et conçues sous la forme d'une surface frontale.

5. Écrou de sécurité (3) et élément de logement (2) pour l'écrou de sécurité (3) pour un entraînement linéaire avec tige filetée (15) autobloquante ou non autobloquante, **caractérisé en ce que**
- l'écrou de sécurité (3) comporte au moins une surface d'application d'écrou (9a, 9b) orthogonale par rapport à l'axe du taraudage de l'écrou de sécurité,
- l'élément de logement (2) pour l'écrou de sécurité (3) comporte au moins une surface d'appui d'élément de logement (8a, 8b) pour l'écrou de sécurité, disposée en oblique par rapport à l'axe du filetage de la tige filetée (15) et conçue sous la forme d'une surface frontale.

6. Écrou de sécurité (3) et élément de logement (3) pour l'écrou de sécurité (3) pour un entraînement linéaire avec tige filetée (15) autobloquante ou non autobloquante, **caractérisé en ce que** l'écrou de sécurité (3) ou l'élément de logement (2) pour l'écrou de sécurité comporte au moins une conformation du type d'un ergot ou un talon saillant pour obtenir un gauchissement de l'écrou de sécurité.

7. Entraînement linéaire avec une avec tige filetée (15) autobloquante ou non autobloquante et un écrou de sécurité (3),
- la tige filetée (15) entraînant un écrou taraudé (1) et un élément de logement (2) pour l'écrou de sécurité, reliés de façon solidaire en rotation avec l'écrou taraudé,
- l'écrou de sécurité (3) comportant une première et deuxième surface d'appui d'écrou (9a, 9b),
- l'élément de logement (2) comportant une première et une deuxième surface d'appui d'élément de logement (8a, 8b),
- l'écrou de sécurité étant maintenu sans déplacement et sans rotation par rapport à l'écrou taraudé (1) dans l'élément de logement (2) sur une zone de rupture théorique, de façon à ce que les surfaces d'appui d'écrou (9a, 9b) et les surfaces d'appui d'élément de logement (8a, 8b) ne se touchent pas et à ce que l'écrou de sécurité (3) co-fonctionne sans contrainte avec l'écrou taraudé, lorsque la zone de rupture théorique est intacte,
- l'écrou de sécurité (3) comportant au moins une surface d'appui d'écrou (9a, 9b) disposée en oblique par rapport à l'axe du taraudage de l'écrou de sécurité et conçue sous la forme d'une surface frontale, et l'élément de logement (2) comportant au moins une surface d'appui d'élément de logement (8a, 8b) orthogonale par rapport à l'axe du taraudage de l'écrou taraudé et dirigée vers au moins la surface d'appui d'écrou (9a, 9b) ou l'écrou de sécurité (3) comportant au moins une surface d'appui d'écrou (9a, 9b) orthogonale par rapport à l'axe du taraudage de l'écrou de sécurité et l'élément de logement (2) comportant au moins une surface d'appui d'élément de logement (8a, 8b) disposée en oblique par rapport à l'axe du taraudage de l'écrou taraudé, conçue sous la forme d'une surface frontale et dirigée vers au moins la surface d'appui d'écrou (9a, 9b), et
- entre l'écrou de sécurité (3) et l'écrou taraudé (15), il existe un jeu permettant le gauchissement de l'écrou de sécurité (3) lorsque la surface d'appui d'écrou (9a, 9b) vient appuyer sur la surface d'appui d'élément de logement (8a, 8b) en cas de défaillance de la zone de rupture théorique.

8. Entraînement linéaire selon la revendication 7, **caractérisé en ce que** l'écrou de sécurité (3) comporte le long de sa surface périphérique des gorges longitudinales ou des rainures longitudinales (12), **en ce qu'**il existe une douille (6) reliée de façon solidaire en rotation avec l'élément de logement (2), dans laquelle l'écrou de sécurité (3) est positionné par rapport à l'écrou taraudé (1) et **en ce qu'**une nervure saillante (11) du type d'un ergot formant la zone de rupture théorique s'accroche sur la douille (6), dans l'une des gorges longitudinales ou des rainures longitudinales (12) de l'écrou de sécurité.
